# FASCICULE DE BREVET EUROPEEN

(11) **EP 1 957 274 B1**
(45) Date de publication et mention de la délivrance du brevet: **24.03.2010**
(21) Numéro de dépôt: 06841872.2
(22) Date de dépôt: 06.12.2006
(51) Int. Cl.: B41F 17/00, B41K 3/14, G02C 7/02

(54) **PROCEDE DE TRANSFERT D'UN MOTIF MICRONIQUE SUR UN ARTICLE OPTIQUE ET ARTICLE OPTIQUE AINSI OBTENU**
VERFAHREN ZUR ÜBERTRAGUNG EINER MIKRONENSTRUKTUR AUF EINE OPTISCHE STRUKTUR UND DADURCH GEWONNENE OPTISCHE STRUKTUR
METHOD FOR TRANSFERRING A MICRON PATTERN ON AN OPTICAL PATTERN AND THE THUS OBTAINED OPTICAL PATTERN

(30) Priorité: 08.12.2005 FR 0512492
(43) Date de publication de la demande: 20.08.2008
(73) Titulaire: ESSILOR INTERNATIONAL (Compagnie Générale d'Optique), 94220 Charenton le Pont (FR)
(72) Inventeur: DEFRANCO, Christelle, F-94220 Charenton Le Pont (FR)
(74) Mandataire: Cabinet Plasseraud
(86) Numéro de dépôt international: PCT/FR2006/002665
(87) Numéro de publication internationale: WO 2007/066006

(56) Documents cités:
- WO-A-99/55790
- DE-A1- 10 060 531
- FR-A- 2 507 196
- US-A- 5 937 758
- US-A1- 2004 115 279

## Description

La présente invention concerne un procédé de transfert d'un motif de taille micronique sur un article optique, ainsi qu'un article optique comprenant un tel motif en utilisant ce procédé. Elle est particulièrement adaptée à un produit du type lentille optique, notamment du type lentille ophtalmique. Ce procédé est très avantageux pour introduire un motif holographique.

Il peut être nécessaire d'imprimer un motif déterminé sur un produit fini ou en cours de fabrication, notamment dans un but de décoration, pour indiquer une marque du produit ou pour empêcher d'éventuelles contrefaçons du produit, par exemple.

Pour cela, plusieurs procédés d'impression ont été développés, qui sont désignés globalement par procédés de lithographie douce (pour «soft-lithography» en anglais), par opposition aux procédés lithographiques utilisés classiquement pour la fabrication de circuits électroniques intégrés. Alors que ces derniers sont basés sur l'irradiation et la dissolution sélectives de portions d'un masque de résine selon un motif déterminé, les procédés de lithographie douce utilisent un tampon dont la surface présente un microrelief constitué de creux et de protubérances. Ce microrelief définit le motif à reproduire sur le produit. Le motif est reproduit sur une face du produit par application du tampon, dans des conditions qui sont adaptées en fonction du matériau présent à la surface du produit.

On désigne par motif l'arrangement géométrique des portions de surface des protubérances mises au contact de la surface du produit lorsque le tampon est appliqué

Dans le procédé de lithographie douce appelé impression par micro-contact («micro-contact printing» en anglais), la face du produit est recouverte d'une couche métallique et le tampon est enduit d'une substance capable de protéger la couche métallique pendant une étape de gravure. Lors de l'application du tampon sur la face du produit, une partie de la substance est sélectivement transférée du tampon sur la couche métallique à des endroits qui correspondent aux protubérances du tampon. La couche métallique n'est ensuite gravée qu'aux endroits de celle-ci qui correspondent aux creux du tampon. Or il est nécessaire d'utiliser une substance qui forme une couche moléculaire auto-assemblée sur la couche métallique pour obtenir une qualité d'impression satisfaisante. Pour cela, la couche métallique doit être dépourvue de pollutions et être constituée d'un métal peu sujet à une éventuelle altération chimique de surface, telle qu'une oxydation. Dans la pratique, seuls l'or, le platine et l'argent permettent d'obtenir une qualité d'impression satisfaisante. Un tel choix du matériau qui constitue le motif imprimé est particulièrement réduit, et peut être incompatible avec d'autres contraintes du produit, telles que son prix de revient. En outre, un tel procédé est long à mettre en oeuvre, notamment à cause de l'étape de gravure de la couche métallique qui est généralement réalisée en utilisant une solution liquide d'un agent de gravure.

Le document JP07-219435, décrit un procédé de fabrication d'un joint à hologramme, suivant lequel un hologramme constitué de creux et de protubérances est d'abord gravé à la surface d'un matériau thermoplastique, puis recouvert par une couche métallique. Or dans un tel procédé, il est difficile de limiter la couche métallique à la portion de la surface qui est occupée par l'hologramme.

Le document US 5 937 758 montre un procédé d'impression par tampon.

Un but de la présente invention est de proposer un procédé de transfert d'un motif qui est simple à mettre en oeuvre et compatible avec un grand nombre de matériaux constituant le motif. La présente invention doit notamment permettre le transfert sur un article optique d'un motif présentant une définition à l'échelle micronique, voire sub-micronique, un tel motif constituant avantageusement un hologramme.

D'une façon générale au sens de l'invention, l'emploi du terme micronique englobe à la fois un motif micronique présentant une définition à l'échelle de la taille du micron, et un motif submicronique présentant une définition à l'échelle inférieure à la taille du micron soit à l'échelle de la centaine voire cinquantaine de nanomètres.

Pour cela, l'invention propose un procédé de transfert d'un motif micronique, tel que défini précédemment, sur une surface d'un article optique qui comprend les étapes suivantes :
/a/ déposer une couche d'au moins un matériau transférable sur une surface d'un tampon comportant des creux et des protubérances, constituant le microrelief à définition micronique ou sub-micronique, correspondant au motif à transférer ;
/b/ déposer une couche d'un latex sous forme liquide sur la surface du substrat de l'article optique;
/c/ avant que la couche de latex soit sèche, mettre en contact la surface du tampon qui comprend la couche de matériau transférable avec la couche de latex.
/d/ appliquer une pression sur le tampon; et
/e/ écarter le tampon de la surface de l'article optique comprenant la couche de latex.

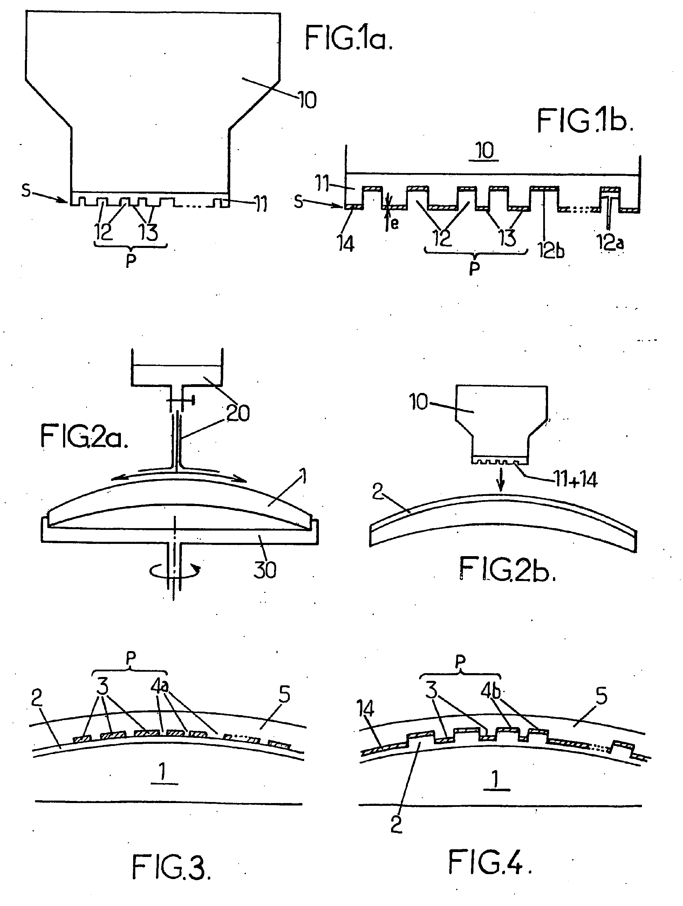

Selon l'invention la couche de matériau transférable déposée sur le microrelief du tampon lors de l'étape /a/ n'épouse généralement pas de façon conforme le microrelief. La couche est présente préférentiellement sur les zones du microrelief qui s'apparentent à des plans orthogonaux à la direction principale dans laquelle s'est effectué le dépôt de matière. Ces zones sont portées par les protubérances (13) ou les creux du tampon (12b), comme indiqué dans la figure 1 b.

Un procédé selon l'invention est donc du type lithographie douce et, de ce fait présente des avantages spécifiques. En particulier, le procédé ne comprend aucune étape de gravure car les portions de la couche de matériau transférable qui sont initialement situées dans les creux de la surface du tampon ne sont pas mises en contact avec la couche de latex qui joue le rôle de matériau adhésif, et de ce fait ne sont pas transférées à la surface du latex. Ce procédé est précis, et présente l'avantage d'être non polluant, aucune étape de gravure chimique étant nécessaire.

Dans le procédé selon l'invention, une couche de latex encore partiellement liquide assure l'adhésion, sur la surface de l'article optique , des portions de la couche de matériau transférable qui sont transférées pendant l'application du tampon. Un tel mécanisme d'adhésion est compatible avec un grand nombre de matériaux transférables, notamment des matériaux conducteurs électriquement, des matériaux métalliques, isolants, diélectriques, ou réfringents. De plus, l'adhésion qui est ainsi obtenue est peu affectée par des pollutions présentes sur l'article optique ou sur la couche de matériau transférable.

Un avantage de l'invention réside dans les conditions de mise en contact du tampon revêtu d'au moins une couche de matériau transférable sur la surface de l'article optique revêtu d'au moins une couche de latex. Ces conditions concernent essentiellement les propriétés de la couche de latex, la pression d'application du tampon et sa durée. Elles peuvent être contrôlées, avec des moyens simples et peu onéreux qui sont couramment disponibles. Les conditions d'obtention d'une couche de latex aux propriétés adéquates relèvent du savoir-faire de l'homme de l'art. Parmi les conditions de mise en contact du tampon avec la surface de l'article optique, d'une façon avantageuse, le procédé selon l'invention est réalisé dans des conditions telles que le tampon présente une approche parallèle à la normale du point de contact sur le substrat de l'article optique.

L'utilisation d'un latex dans ce type de procédé est particulièrement avantageuse dans la mesure où le latex présente une propriété adhésive qui n'existe que de façon transitoire durant la phase de séchage. Il n'est donc pas indispensable après avoir mis en oeuvre le procédé de retirer la couche de latex sur l'article optique en dehors de la zone portant le motif. Le caractère adhésif de la couche de latex disparaît à mesure qu'elle sèche et que les particules de latex coalescent.

D'autre part, l'utilisation d'un latex dans ce type de procédé est également très avantageuse dans la mesure òu selon un mode de réalisation de l'invention le latex est apte à reproduire un microrelief spécifique imposé par la pression d'un microrelief maître.

Comme mentionné précédemment, le motif peut être micronique ou submicronique, le terme micronique étant utilisé d'une façon générale dans l'ensemble de la description pour désigner ces deux tailles de motifs. Ainsi d'une façon générale au sens de l'invention, on entend par motif micronique un motif comprenant un ou plusieurs motifs élémentaires; chaque motif élémentaire présentant une taille comprise entre 10 µm (micromètre) et 50 nm (nanomètre), avantageusement entre 5 µm et 100 nm, et très avantageusement entre 3 µm et 150 nm.

Le motif transféré peut être, en particulier, un motif diffractant lorsqu'il est éclairé par un faisceau lumineux. Ce peut être notamment un motif holographique. Un tel motif est particulièrement adapté pour permettre d'identifier un produit et/ou de distinguer un produit original d'une copie de contrefaçon. Plus particulièrement, le procédé selon l'invention est particulièrement adapté pour introduire un hologramme d'amplitude sur l'article optique. On désigne par hologramme d'amplitude une microstructure holographique qui affecte préférentiellement l'amplitude du champ électromagnétique en incidence normale. C'est le cas en particulier d'un hologramme composé d'un arrangement de zones transparentes et de zones opaques, qui sont également réfléchissantes dans le cas ou l'opacité est obtenue par un métal. Une image de lecture correspondant à l'hologramme peut alors être visualisée par transmission ou par réflexion d'un faisceau lumineux sur la lentille.

Le motif transféré selon l'invention est également adapté pour introduire un hologramme de phase sur l'article optique. On désigne par hologramme de phase une microstructure holographique qui affecte préférentiellement la phase du champ électromagnétique en incidence normale.

Le motif lui-même peut aussi représenter un logo ou une inscription directement lisible sur l'article optique. Lorsque le motif est constitué d'une pluralité de motifs élémentaires et identiques, il peut être à la fois du type holographique et posséder une signification directement lisible sur l'article optique.

Le motif holographique peut également être de type hologramme numérique, c'est-à-dire un hologramme généré par ordinateur (souvent dénommé par l'acronyme anglais « CGH » pour « Computer Generated Hologramme »). Dans un tel cas, le motif holographique peut être constitué d'un ensemble de pixels contigus, chaque pixel ayant une surface comprise entre 0,2 µm² et 25 µm², avantageusement entre 0,2 µm² et 4 µm². Préférentiellement, le motif comprendra un grand nombre de pixels, par exemple, un nombre total supérieur à 10 000 pixels, permettant ainsi d'obtenir par reconstruction sous illumination une image présentant une résolution suffisante.

Le motif transféré peut occuper une partie réduite d'une face de l'article, notamment pour ne pas masquer ledit article lui-même ou pour ne pas gêner une utilisation ultérieure de l'article. Dans une telle configuration, le motif occupera de façon préférentielle une partie de la face de l'article inférieure à 25 mm².

Alternativement, le motif transféré peut occuper sensiblement toute une face de l'article, notamment lorsqu'il comprend un réseau de fils microniques ou submicroniques. Un tel motif occupant toute une face de l'article peut être réalisé pour obtenir une fonction antistatique à la surface de l'article optique, pour réaliser un ensemble d'électrodes d'une matrice d'affichage ou encore une fonction de filtrage en polarisation d'une lumière réfléchie ou transmise par l'article optique. Dans ce dernier cas, l'effet polarisant est obtenu en transférant un motif de fils conducteurs parallèles (réseau de type polariseur à fil ou « wire-grid » selon la dénomination anglaise).

Avantageusement, un traitement de la surface de l'article optique peut être effectué avant de disposer la couche de latex sur la surface dudit article optique. Ce traitement est notamment choisi parmi un traitement chimique, thermique, plasma et corona. Ce traitement de la surface peut notamment comprendre un traitement chimique consistant en un nettoyage avec de l'isopropanol et/ou de l'eau de la surface de l'article optique. Ainsi, des poussières ou salissures éventuellement présentes sur cette surface peuvent être retirées.

La couche de latex peut dans le cadre de l'invention être déposée par un procédé de centrifugation (spin coating), procédé bien intégré notamment dans les chaînes de production de lentilles ophtalmiques. Elle peut également être déposée par d'autres techniques de dépôt telles que le trempage (dip-coating), le spray, le jet de matière à l'aide de buses d'une tête d'impression jet d'encre. L'épaisseur de la couche de latex déposée à la surface de l'article optique est généralement comprise entre 0,2 µm et 50 µm, avantageusement entre 1 µm et 10 µm. La couche doit être optiquement transparente. Son taux de transmission peut être variable, notamment en cas de couche teintée, mais elle ne doit ni diffuser, ni diffracter, ni modifier la perception d'un objet observé par transparence au travers de l'article optique comprenant une telle couche de matériau adhésif.

Le procédé peut comprendre en outre l'étape suivante, qui est réalisée après l'étape /a/ et/ou l'étape /e/:
/f/ recouvrir la surface de l'article optique par un ou plusieurs revêtements fonctionnalisés.

Ces revêtements fonctionnalisés peuvent être déposés sous forme de film ou de vernis monocouche ou multicouches, par tout moyen de dépôt tel que par exemple le trempage, la centrifugation, le spray, ou l'impression par jet de matière par les buses d'une tête d'impression jet d'encre. Ils sont avantageusement choisis parmi les revêtements présentant une fonctionnalité de type anti-choc, anti-abrasion, antireflet, antisalissure, antibuée, antistatique, polarisante, colorante et photochromique.

Selon un mode préférentiel de l'invention, le procédé comprend ainsi une étape supplémentaire qui est réalisée après l'étape /e/ et qui consiste à recouvrir la surface de l'article optique par au moins un revêtement fonctionnalisé par dessus le motif transféré et la couche de latex. Ce revêtement en plus de sa fonctionnalisation constitue avantageusement un revêtement de protection du motif transféré.

Le matériau transférable peut être un matériau métallique tel que, par exemple, de l'or, de l'aluminium, du chrome, de l'argent, du cuivre, du nickel, du platine, du palladium ou un alliage comprenant l'un au moins de ces métaux. Dans ce cas, la couche de matériau transférable peut être avantageusement déposée à l'étape /a/ sur la surface du tampon par évaporation sous vide ou par pulvérisation cathodique sous vide (sputtering). D'une façon générale, on a pu constater que plus le temps entre le dépôt de la couche métallique sur le tampon et la réalisation de l'étape /c/ est court, meilleur est le transfert de ladite couche métallique sur le latex. Ceci s'explique notamment par une absence de contamination de la couche métallique qui pénalise la qualité de l'adhésion.

Alternativement, la couche de matériau transférable peut comprendre un empilement de plusieurs couches de matériaux respectifs. Le matériau de l'une au moins des couches de l'empilement peut alors être réfringent. Dans ce cas, la visualisation du motif transféré peut aussi résulter partiellement d'un comportement interférentiel d'un faisceau lumineux utilisé pour éclairer le motif. Le transfert d'un empilement de plusieurs couches matériaux peut ainsi conduire, en fonction de l'épaisseur dudit empilement, à la réalisation d'un hologramme qui affecte très notablement la phase du champ électromagnétique en incidence normale Un tel transfert permet ainsi de se rapprocher des conditions de réalisation d'un hologramme de phase. On désigne par hologramme de phase une microstructure holographique qui affecte préférentiellement la phase du champ électromagnétique en incidence normale.

Selon un premier mode de mise en oeuvre de l'invention, la surface du tampon est appliquée contre la surface de l'article optique qui porte la couche de latex, à l'étape /c/, dans des conditions adaptées de sorte que les portions de la couche de matériau transférable qui sont situées sur les protubérances de la surface du tampon sont sélectivement transférées sur la surface de l'article optique. Selon ce premier mode, les portions de la couche de matériau transférable qui se situent dans les creux du tampon ne sont pas transférées sur la surface de l'article optique lors de l'application du tampon car les creux du microrelief ne sont pas mis en contact avec la couche de latex. Pour cela, le tampon est appliqué à l'étape /c/ avec une pression modérée, de sorte que les protubérances du tampon ne pénètrent pas dans la couche de latex. La couche de latex conserve alors une épaisseur sensiblement constante sur la face de l'article optique, au moins dans la partie de cette face qui est occupée par le motif transféré. Le contraste du motif transféré résulte alors de la présence ou de l'absence de matériau transférable sur la surface de l'article, en des endroits différents du motif. Dans ce cas, le motif transféré forme une juxtaposition de zones opaques et transparentes, et si ce motif forme une structure diffractive holographique, le résultat est un hologramme d'amplitude. Dans ce mode de réalisation de l'invention, la combinaison du transfert sélectif, du matériau transférable présent sur les protubérances, sur l'article optique, et l'absence de pénétration du latex dans les creux du motif, permettent la formation d'un hologramme d'amplitude.

Selon un second mode de mise en oeuvre de l'invention, la surface du tampon est appliquée contre la surface de l'article optique qui porte la couche de latex, à l'étape /c/, dans des conditions adaptées de sorte que les protubérances de la surface du tampon pénètrent complètement dans la couche de latex de sorte que les portions de la couche de matériau transférable qui sont situées sur les protubérances de la surface du tampon ainsi que celles situées dans les creux du tampon sont conjointement transférées sur la surface de l'article optique. De préférence, la surface du tampon est appliquée pendant une durée adaptée, c'est-à-dire un temps de séchage adapté, de sorte qu'après éloignement du tampon la couche de latex présente des enfoncements permanents créés par la pénétration des protubérances du tampon dans la couche de latex. La couche de latex présente ainsi à sa surface un microrelief qui n'est autre que le complémentaire du microrelief porté par la surface du tampon. Autrement dit, le motif est moulé dans la couche de latex. Le microrelief porté par la couche de latex est constitué de creux et de protubérances. Les creux et les protubérances sont recouverts de portions de la couche métallique transférées. Dans ce cas, le contraste du motif transféré peut résulter, au moins en partie, des variations d'épaisseur de la couche de latex. Lorsque le motif transféré est un motif holographique, le microrelief obtenu peut constituer un hologramme de phase. On désigne par hologramme de phase une microstructure holographique qui affecte préférentiellement la phase du champ électromagnétique en incidence normale.

L'invention propose aussi un article optique qui comprend un motif transféré sur une surface de celui-ci en utilisant un procédé tel que décrit précédemment. Cet article optique comprend une lentille optique d'instrumentation, une lentille optique de visée, une visière, ainsi qu'une lentille ophtalmique, et en particulier une telle lentille qui est adaptée pour être assemblée dans une monture de paire de lunettes. Une telle lentille comprend alors elle-même :
- une lentille de base comprenant au moins un substrat organique ou minéral,
- une couche de latex séché, et
- des portions d'un matériau transférable formant le motif transféré, par adhésion sur la lentille de base via la couche de latex.

La lentille de base comprend notamment un substrat organique. Par substrat, on entend le matériau transparent constitutif de base de la lentille optique et plus particulièrement de la lentille ophtalmique. Ce matériau sert de support à l'empilement d'un ou plusieurs revêtements, et participe à créer la fonction correctrice de la lentille dans le cas d'une lentille ophtalmique correctrice. Dans le cas où l'article optique est une lentille ophtalmique sont adaptés, par exemple, les substrats du type polycarbonates; polyamides ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide. Dans certains cas, les substrat peuvent être teintés directement dans la masse.

Entre le substrat organique et la couche de latex, un ou plusieurs revêtements peuvent optionnellement être présents. Ces revêtements sont notamment les revêtements fonctionnalisés tels que décrits précédemment.

Etant donné que la lentille est essentiellement transparente, lorsque le motif est de type holographique, il peut être adapté pour former une image de lecture lorsqu'un faisceau lumineux est envoyé à travers la lentille à l'endroit du motif.

La couche de latex peut former en outre une protection de la lentille contre des chocs éventuels reçus ultérieurement par celle-ci. Avantageusement, une couche d'un matériau résistant à des rayures est aussi formée sur la lentille, par dessus la couche de latex et le motif transféré.

D'autres particularités et avantages de la présente invention apparaîtront dans la description ci-après de deux exemples de mise en oeuvre non limitatifs, en référence aux dessins annexés, dans lesquels :
- les figures 1 a et 1 b sont des vues en coupe d'un tampon utilisé dans un procédé de transfert selon l'invention ;
- les figures 2a et 2b illustrent des étapes ultérieures du procédé ;
- les figures 3 et 4 sont des vues en coupe de motifs transférés selon deux modes de mise en oeuvre de l'invention ; et
- la figure 5 illustre une étape de lecture d'un motif holographique transféré selon l'invention.

Pour raison de clarté, les dimensions des différents éléments représentés sur ces figures ne sont pas en proportion avec des dimensions ou des rapports de dimensions réels. Par ailleurs, sur toutes les figures, des références identiques correspondent à des éléments identiques.

On décrit maintenant l'invention dans le cadre du transfert d'un motif holographique sur une lentille ophtalmique. Dans cette description, des étapes élémentaires du procédé de l'invention qui sont connues individuellement de procédés existants ne sont pas reprises en détail. On s'attache seulement à décrire une succession d'étapes élémentaires qui permet de réaliser un transfert selon l'invention.

Conformément à la figure 1a, un tampon comporte une base 10 et une membrane 11. La membrane 11 possède une surface S et est fixée sur la base 10 par sa face opposée à la surface S. La surface S supportant le motif comporte des creux 12 et des protubérances 13 qui correspondent à deux valeurs différentes de l'épaisseur de la membrane 11. Les creux 12 et les protubérances 13 forment un microrelief de taille micronique, qui définit le motif noté P. P désigne l'arrangement géométrique des portions de surface des protubérances destinées à être mises en contact avec la surface de l'article optique.. La membrane 11 peut être à base de polydiméthylsiloxane, ou PDMS au moins à l'endroit des protubérances 13 de la surface S du tampon. Un tel matériau présente une faible énergie de surface, qui est favorable pour obtenir une bonne qualité de transfert. Cette faible énergie de surface du matériau constitutif de la membrane ainsi que son caractère mou caractérisé par son module élastique est une condition importante car elle garantit un contact parfait entre la couche de latex et les portions de matériaux transférables portées par la surface S du tampon, et garantit également que la couche transférable, notamment métallique se désolidarise aisément du tampon pour adhérer à la couche adhésive. A titre indicatif le PDMS commercial dénommé Sylgard 184 (Dow Corning) présente un module élastique de 2,5 MPa (MégaPascal). D'autres matériaux, en particulier de type matériau élastomère, peuvent aussi convenir pour la membrane 11. Les creux 12 et les protubérances 13 peuvent être formés de différentes façons. Par exemple, un liquide contenant des monomères précurseurs de l'élastomère peut être versé dans un moule de membrane pourvu du motif P, puis polymérisé à l'intérieur du moule par chauffage ou par irradiation avec une lumière UV. La membrane 11 qui est obtenue après démoulage est fixée sur la base 10. Pour une membrane 11 ainsi réalisée, les creux 12 et les protubérances 13 peuvent avoir des dimensions comprises entre 10 micromètres et 50 nanomètres, par exemple, mesurées parallèlement à la membrane 11. La profondeur des creux 12 peut être de 0,1 micromètre à 30 micromètres, avantageusement de 0,1 à 10 micromètres.

Avantageusement, une couche facilitant la désolidarisation de la couche métallique 14 d'avec la membrane 11 peut être déposée sur la surface S avant le dépôt de la couche de matériau transférable 14.

La surface S peut se déformer lors d'une application de celle-ci contre la surface réceptrice, en fonction d'une courbure de cette dernière. Cette déformation peut résulter d'un écrasement de la membrane qui varie le long de la surface S, et/ou d'un recul variable de la membrane lorsqu'elle est fixée d'une façon appropriée sur la base 10.

La figure 1b est une vue élargie de la membrane 11. Une couche 14, par exemple en or ou en aluminium, est déposée sur la membrane 11. et se répartit sur les zones du microrelief (12b et 13) qui constituent des plans orthogonaux à la direction principale dans laquelle s'est effectué le dépôt de matière. La couche 14 peut avoir une épaisseur e de 30 nanomètres, par exemple. Elle peut être déposée sur la surface S de plusieurs façons, notamment par évaporation sous vide d'une quantité d'or ou d'aluminium contenue dans un creuset et chauffée par effet Joule.

Conformément à la figure 2a, une lentille ophtalmique, qui est constituée initialement par une lentille de base 1, présente par exemple une face antérieure convexe et une face postérieure concave. Dans la suite, le motif P est transféré sur la face antérieure de la lentille, mais il est entendu qu'un transfert similaire peut être effectué sur la face postérieure. Ainsi l'invention est particulièrement adaptée pour transférer un motif sur une surface pseudo-sphérique. Dans le cadre de l'invention, on entend par surface pseudo-sphérique une surface concave ou convexe continue, c'est-à-dire dépourvue de trous ou de marches. En général, au moins l'une des deux faces d'une lentille optique est pseudo-sphérique; de sorte que la variation d'épaisseur de la lentille qui en résulte lui confère un pouvoir optique. Des verres ophtalmiques afocaux, unifocaux, bifocaux, trifocaux et progressifs ont tous au moins une face pseudo-sphérique. Une surface sphérique correspond à un cas particulier de surface pseudo-sphérique, pour lequel des rayons de courbure de la surface selon deux directions perpendiculaires sont égaux. Dans la suite, l'expression «surface pseudo-sphérique» est entendue comme incluant le cas particulier des surfaces sphériques.

La lentille ophtalmique 1 peut être d'un type quelconque tel que décrit précédemment. Par lentille ophtalmique, on entend les Tentilles s'adaptant notamment à une monture de lunette et dont la fonction est de protéger l'oeil et/ou corriger la vue.

Préférentiellement, la surface de la lentille 1 qui est destinée à recevoir le motif P est d'abord nettoyée. Pour cela, la lentille peut être soumise à un traitement corona ou à un traitement par plasma, mais un procédé de nettoyage au moyen d'une ou de plusieurs solutions détergentes et/ou de rinçage peut aussi être utilisé.

Une couche de latex sous forme liquide est formée sur la face antérieure de la lentille 1. D'une façon préférée, la couche de latex est déposée par centrifugation («spin coating» en anglais) en utilisant une solution liquide du latex, référencée 20. La lentille 1 est placée horizontalement sur un support 30 et mise en rotation autour d'un axe vertical. Le liquide 20 est alors dispensé sur la lentille 1. La vitesse de rotation de la lentille lors de l'étalement du latex détermine, d'une façon connue en soi, l'épaisseur de la couche de latex qui est formée sur la lentille. La durée de l'étalement influence le séchage de la couche de latex. La couche de latex est référencée 2 dans la suite.

Grâce à l'utilisation d'un matériau de type latex, la face antérieure de la lentille 1 qui est recouverte par la couche 2 présente un pouvoir adhésif temporaire, tant que la couche 2 n'est pas définitivement sèche. Ce pouvoir adhésif résulte de nombreuses liaisons chimiques pendantes présentes dans le latex liquide. Plusieurs latex peuvent être utilisés pour constituer la couche 2, parmi lesquels on peut citer, à titre d'exemples, les latex de polyuréthanes, les latex de poly(meth)acrylate, les latex de polyester, les latex comprenant des unités butadiènes tels que les polybutadiènes ou les poly(styrène-butadiène). De tels latex sont notamment décrits dans les brevets US 5,316,791, US 6,503,631 et US 6,489,028, lesquels sont incorporés ici à titre de référence. Il est également possible d'utiliser des latex photochromiques comme décrits dans les brevets EP 1 161 512 et FR 2 811 322. D'une façon avantageuse on utilisera des latex acryliques tel que celui commercialisé par la société Zeneca sous la dénomination A-639, ou des latex de polyuréthane commercialisés sous les dénominations W-240 et W-234 par la société Baxenden.

La surface S du tampon, et plus spécifiquement les protubérances 13 et les creux 12b qui portent la couche métallique 14, est alors appliquée contre la face antérieure de la lentille 1 recouverte par la couche 2. Pour cela, le tampon est approché selon une direction sensiblement perpendiculaire à la face de la lentille (figure 2b). L'application est effectuée avec une pression suffisante pour obtenir une bonne cohésion de la couche métallique 14 avec la couche de latex 2, au niveau des protubérances 13 de la surface S.

Selon un premier mode de mise en oeuvre de l'invention illustré par la figure 3, la pression d'application du tampon contre la lentille 1 n'est pas trop importante afin d'éviter que du latex de la couche 2 ne pénètre entre les protubérances 13 pendant l'application. Autrement dit, les protubérances 13 de la surface S ne pénètrent pas dans la couche 2. De cette façon, seules des portions de la couche métallique 14 qui sont situées initialement sur les protubérances 13 entrent en contact avec la couche de latex 2. Lorsque le tampon est retiré, ces portions de la couche 14, référencées 3 sur la figure 3, restent sélectivement collées sur la lentille 1, du fait du pouvoir adhésif du latex pas encore sec. Elles ont des formes qui reproduisent celles des protubérances 13 de la surface S du tampon, parallèlement à la surface de la lentille, de sorte que le motif P est transféré sur la lentille 1. Le matériau de la couche 14 possède donc une fonction de matériau de transfert du motif P sur la lentille 1. Les portions de la couche 14 qui sont situées dans les creux 12 de la surface S sont retirées avec le tampon lorsque celui-ci est écarté de la lentille 1, puisqu'elles ne sont pas entrées en contact avec la couche de latex 2. Des intervalles dépourvus de matériau métallique, référencés 4a sur la figure 3 et qui correspondent aux creux 12 de la surface S, séparent ainsi les portions 3 sur la face antérieure de la lentille 1. Les inventeurs ont constaté que des pressions d'application du tampon sur la lentille 1, qui sont comprises entre 0,1 et 60 grammes par millimètre-carré de surface des protubérances du motif P, procurent des qualités de transfert sélectif permettant l'obtention d'un hologramme d'amplitude. Pour une telle mise en oeuvre de l'invention, le tampon est appliqué contre la lentille 1 lorsque la couche de latex 2 a commencé à se densifier en séchant partiellement, mais alors que celle-ci n'a pas encore séché complètement, pour conserver un pouvoir collant suffisant. Par exemple, le tampon peut être appliqué contre la lentille dix secondes après le dépôt de la couche de latex par centrifugation, et pendant deux secondes. Les portions de matériau 3 qui forment le motif transféré P sont alors situées à un même niveau sur la couche de latex 2, selon une direction perpendiculaire à cette couche, et sont séparées par des intervalles dépourvus de matériau transférable.

Selon un second mode de mise en oeuvre illustré par la figure 4, la pression d'application du tampon contre la lentille 1 est suffisante pour provoquer une pénétration dans les creux 12 du latex de la couche 2 entre les protubérances 13. Les protubérances 13 de la surface S pénètrent donc dans la couche 2. De cette façon, l'ensemble des portions de matériaux transférables de la couche métallique 14 entre en contact avec la couche de latex 2 de sorte que, lorsque le tampon est retiré, toutes les portions de la couche 14 restent entièrement collées sur la couche 2, c'est-à-dire aussi bien la couche de matériau transférable présent sur les protubérances que la couche de matériau transférable présent dans la partie 12b des creux. La pénétration des protubérances 13 dans la couche 2 crée dans cette dernière une reproduction du microrelief, par moulage ou embossage. Le motif qui est transféré sur la lentille 1 est alors constitué de plusieurs portions du matériau transférable de la couche 14, qui sont situées à des niveaux différents de profondeur de moulage du microrelief dans la couche de latex 2. Sur la figure 4, les portions référencées 3 et 4b correspondent respectivement aux protubérances 13 et aux creux 12 de la surface S du tampon. Les inventeurs ont constaté que la pression d'application du tampon sur la lentille 1 peut être supérieure à 60 grammes par millimètre-carré lorsque le tampon est encore appliqué contre la lentille 1 avec un délai de dix secondes après le dépôt de la couche 2 par centrifugation, et ce, pendant deux secondes. La surface prise en compte pour le calcul de la pression est celle des protubérances 13 constituant le motif P.

Une fois que la couche de latex 2 a complètement séché, elle a perdu son comportement adhésif, de sorte que la lentille 1 peut être touchée sans adhérence sur toute sa face antérieure. Simultanément, la couche 2 assure définitivement la fixation des portions 3 de matériau transférable (provenant des zones 13), ou de toutes les portions de la couche 14 transférées provenant des protubérances 13 et des creux 12b qui constitue(nt) le motif transféré P.

De façon particulièrement avantageuse, la couche de latex 2 constitue en outre une protection de la lentille 1 contre des chocs. En effet, une couche de latex peut amortir un choc appliqué sur une surface. La couche 2 peut donc présenter une double fonction dans le cadre de l'invention : outre la fixation de portions de matériau transférable sur la lentille, elle protège celle-ci contre des chocs éventuels.

Une couche supérieure 5 peut en outre être appliquée sur la face antérieure de la lentille 1. Cette couche 5 recouvre notamment le motif transféré P. Elle peut être formée à partir d'une solution de précurseurs déposée sur la couche de latex 2 et sur les portions 3 de matériau transféré qui forment le motif P (figure 3), ou sur toutes les portions de la couche 14 transférées recouvrant le microrelief moulé dans le latex (figure 4). Une telle couche supérieure 5 peut posséder en outre une fonction optique telle que, par exemple, une fonction de polarisation, d'absorption, de coloration ou de filtrage d'une lumière qui traverse la lentille 1.

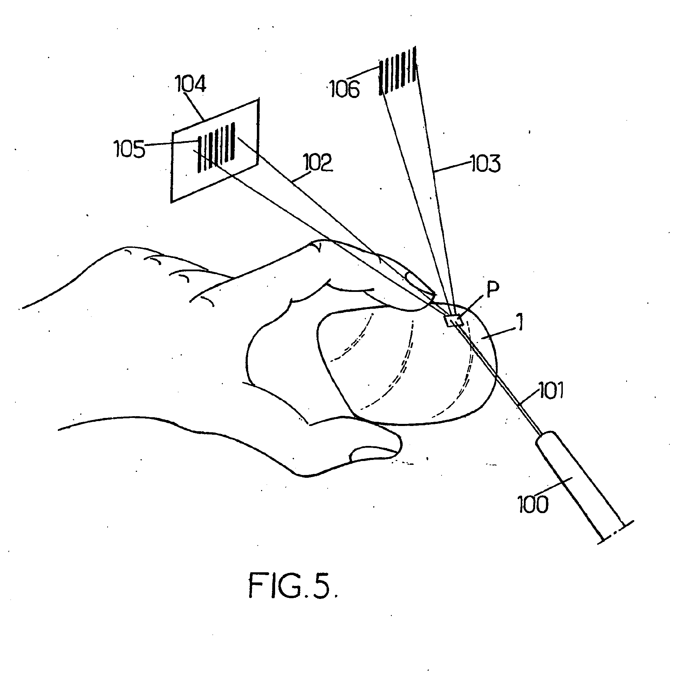

Dans le cas où le motif transféré constitue une structure diffractive holographique, une image de lecture diffractée par l'hologramme et restituant l'information qu'il contient peut alors être visualisée par transmission ou par réflexion d'un faisceau lumineux cohérent sur la lentille 1, à l'endroit du motif transféré P. Pour cela, conformément à la figure 5, le motif holographique P est éclairé par un stylo laser 100 de faible puissance, par exemple de couleur rouge de longueur d'onde 645 nanomètres. De façon connue, la distance entre le laser 100 et le motif P n'est pas critique pour la reconstruction de l'image. Le faisceau lumineux 101 issu du laser 100 est diffracté par le motif P, de sorte qu'il est divisé en au moins deux faisceaux secondaires 102 et 103 après avoir traversé la lentille 1. Chacun des deux faisceaux 102 et 103 reconstruit une image à une distance de la lentille 1 qui peut être comprise entre 20 et 50 centimètres, par exemple. Cette image est révélée en disposant un objet 104 servant d'écran sur le trajet de l'un des deux faisceaux 102 ou 103. Du fait que la lumière utilisée est issue d'un laser, l'objet qui sert d'écran peut être quelconque. Eventuellement, l'image peut aussi être projetée sur un capteur d'image, par exemple de type CCD (pour « Charge Coupled Device ») ou CMOS (pour « Complementary Metal Oxide Semiconductor »)" pour en permettre une reconnaissance rapide et précise. Sur la figure 5, les images qui correspondent à chacun des deux faisceaux 102 et 103 sont référencées 105 et 106, respectivement. Elles correspondent à deux ordres de diffraction opposés, par exemple +1 et -1, de sorte que les deux images 105 et 106 sont inversées l'une par rapport à l'autre. L'image qui n'est pas inversée, ou «image directe», correspond à l'ordre de diffraction +1 et est l'image de lecture du motif holographique P.

La lentille ophtalmique 1 peut être destinée à être assemblée dans une monture de paire de lunettes. Afin de ne pas gêner la vision d'un porteur de lunettes, le motif P peut être de petites dimensions et imprimé à proximité d'un bord de la lentille 1 (figure 5). Par exemple, le motif transféré P peut occuper une partie de la face de la lentille 1 qui est inférieure à 25 mm². Le motif peut également être introduit sur une partie de la lentille appelée à être détourée. Dans ce cas le motif est principalement introduit dans un but de traçabilité du produit final. Une telle configuration est particulièrement intéressante si le motif transféré correspond à un hologramme généré par ordinateur de type CGH et qui est constitué de pixels. Un tel hologramme peut ainsi contenir une quantité d'information très importante sur un espace très petit compris avantageusement entre 15 mm² et 0,5 mm², permettant par exemple de garantir une traçabilité complète de l'article optique dans la chaîne de production et de logistique.

Alternativement, le motif transféré P peut occuper toute la face antérieure de la lentille 1, par exemple lorsqu'il confère à la lentille une fonction optique particulière. Ce peut être le cas, notamment, lorsque le motif transféré P est constitué d'un ensemble de fils conducteurs électriquement et parallèles à une direction déterminée, pour filtrer de la lumière qui traverse la lentille en fonction d'une polarisation de celle-ci. Typiquement, les fils conducteurs ont une largeur de quelques dizaines de nanomètres et sont espacés deux à deux de quelques dizaines de nanomètres.

De nombreuses modifications du procédé de transfert qui a été décrit en détail ci-dessus peuvent être introduites, tout en conservant certains au moins des avantages de l'invention. Par exemple, une couche intermédiaire peut être déposée sur la membrane 11 du tampon avant la couche de matériau transférable 14, pour ajuster une énergie de surface entre la couche 14 et la membrane 11 du tampon. Un tel ajustement peut encore améliorer le transfert des portions 3 de matériau transférable sur la lentille 1. Par ailleurs, le motif transféré sur la lentille peut être un motif diffractant, c'est-à-dire dont la visibilité résulte d'une diffraction de la lumière par les portions 3 et/ou les intervalles 4 présents entre celles-ci. Enfin, le motif qui est transféré peut être visible dans des conditions d'éclairement ambiant, ou lorsqu'il est éclairé par un faisceau laser.

### EXEMPLE:

### 1. Couche de latex (2)

Le paramètre clé du procédé est l'état de la couche de Latex au moment de l'étape /c/ : mise en contact de la surface du tampon qui comprend la couche de matériau transférable avec la couche de Latex.

Lors de cette étape, la couche de Latex doit être non sèche, de façon à ce qu'elle soit :
- adhésive, pour permettre le transfert de la couche adhésive
- déformable, pour permettre au latex de se déformer définitivement, de façon à reconstituer un microrelief constitué de creux et de protubérances ; microrelief complémentaire du microrelief constituant le motif P sur la surface du tampon

Nous dénommerons latex A une solution aqueuse de latex polyuréthane W234 de la société Baxenden présentant les propriétés suivantes mesurées à 21,6°C et 44% d'humidité relative :
- Viscosité : 7 centipoise
- Extrait sec : 22.25%

Une couche de latex A d'épaisseur 1 µm est déposée par centrifugation sur la face convexe d'une lentille ophtalmique à base d'Orma® (Essilor), de rayon de courbure 120 mm, selon les conditions suivantes :
Conditions de dépôt pour l'obtention d'une couche non sèche (à 21,6°C et 44% d'humidité relative):
   - dispense de 2,5mL de Latex sur la lentille
   - rotation de la lentille à 2000 tours par minute durant 15 secondes
   - rotation de la lentille à 2500 tours par minute durant 2 secondes

La couche de latex ainsi déposée conserve ses propriétés durant une dizaine de secondes, laps de temps qui définit la fenêtre de procédé durant laquelle le transfert doit être effectué.

### 2. Motif à transférer (3)

Le procédé cité en exemple est optimisé pour un motif holographique numérique composé de pixels élémentaires carrés de dimension 1 µm de côté.

Pour ce faire, la membrane 11 du tampon porte en sa surface un microrelief consistant en des creux 12 et des protubérances 13 de profil rectangulaire comme schématisé sur la figure 1.a. La profondeur du microrelief (différence d'altitude entre les creux 12b et les protubérances 13) est de 1µm.

Le motif holographique a des caractéristiques telles que la largeur des protubérances du microrelief porté par la membrane 11 et mesurée selon un axe parallèle à un bord des pixels carrés varie entre 1µm et 85µm selon la zone du tampon considérée.

### 3. Tampon portant le motif (Fig. 1a.):

Le motif à transférer est moulé dans du Sylgard® 184 (11) (Dow Coming). Les propriétés de ce matériau après polymérisation à 100°C durant 1 heure sont les suivantes:
- énergie de surface : 22 mN/m
- Module d'Young : 2,5 MPa.

### 4. Couche métallique (14)

La couche métallique est obtenue par évaporation sous vide. Le matériau métallique adéquat est disposé dans un creuset, et chauffé par effet Joule. L'évaporation est effectuée sur le tampon en Sylgard® 184 n'ayant subi aucune préparation de surface préalable.

Dans le cas de l'or ; une couche de 30 nm d'épaisseur est obtenue en évaporant de l'or d'une pureté de 99.9%.

Dans le cas de l'aluminium ; une couche de 30 nm d'épaisseur est obtenue en évaporant des grenailles d'aluminium d'une pureté de 99.5%.

L'évaporation de la couche métallique a lieu dans la même journée que l'étape de transfert sur la lentille ophtalmique.

### 5. Transfert (Fig. 2b.)

Dans le cas du premier mode de mise en oeuvre de l'invention : le transfert de la couche 14 se fait sélectivement : seules les portions de matériau initialement situées sur les protubérances (13) du tampon sont transférées. Le motif holographique transféré est de type hologramme d'amplitude.

Dans cas du second mode de mise en oeuvre de l'invention : les protubérances de la surface du tampon peuvent pénétrer entièrement dans la couche de latex. Le transfert de la couche 14 est intégral : toutes les portions de la couche transférable 14 présentes sur les protubérances 13 et les creux 12b sont transférées. Le transfert intégral des portions de la couche 14 s'accompagne de l'enfoncement permanent de la couche de latex, reproduisant le microrelief complémentaire du microrelief constituant le motif P du tampon. Le motif holographique transféré est de type hologramme de phase, recouvert d'une couche métallique.

Le tamponnage se fait orthogonalement à la surface.

De la pression de tamponnage appliquée dépend le résultat du transfert, et donc le mode de mise en oeuvre de l'invention :
Si cette pression est inférieure à une pression Pₗᵢₘᵢₜₑ : le transfert est sélectif ; il s'agit du premier mode de mise en oeuvre de l'invention : hologramme d'amplitude.

Si cette pression est supérieure à une pression Pₗᵢₘᵢₜₑ : le transfert est intégral, et s'accompagne de l'enfoncement permanent de la couche de Latex, reproduisant le microrelief complémentaire du microrelief constituant le motif P sur le tampon.

Cette pression Pₗᵢₘᵢₜₑ est déterminée pour une couche de 30 nm d'or ou d'aluminium, sur le latex déposé dans les conditions décrites ci-dessus.

Elle est de Pₗᵢₘᵢₜₑ = 45 à 60 g/mm² de la surface des protubérances 13 du tampon constituant le motif P.

Le tableau ci-après présente les résultats de différentes conditions testées:

| Pression appliquée sur le tampon | Résultat |
|---|---|
| 6 g/mm² | Transfert parfaitement sélectif. |
| 40 g/mm² | Hologramme d'amplitude. |
| Limite transfert sélectif : Pₗᵢₘᵢₜₑ = 45 - 60 g/mm² | |
| 67 g/mm² | Transfert intégral avec enfoncement permanent de la couche de Latex. Hologramme de phase. |

### Pressions appliquées pour l'exemple du transfert sélectif d'or:

La pression appliquée pour le tamponnage du tampon sur la face convexe d'une lentille ophtalmique (d'un rayon de courbure 120 mm) recouverte d'une couche de latex déposée dans les conditions décrites ci-dessus est de 1,5 g/mm². Le transfert de la couche d'or de 30nm est sélectif ; l'hologramme obtenu est un hologramme d'amplitude.

*Pressions appliquées pour l'exemple du transfert intégral d'aluminium.* avec enfoncement permanent de la couche de latex A, reproduisant à l'inverse les creux 12 et les protubérances 13 du tampon, constituant le motif P :

La pression appliquée pour le tamponnage du tampon sur la face convexe d'une lentille ophtalmique (d'un rayon de courbure 120 mm) recouverte d'une couche de latex déposée dans les conditions décrites ci-dessus est de 1,5 g/mm². Le transfert de la couche d'aluminium de 30 nm est intégral, et la couche de latex est enfoncée définitivement, de façon que le microrelief de la couche de latex soit le microrelief complémentaire du microrelief constituant le motif P sur la surface du tampon. L'hologramme obtenu est un hologramme de phase.

## Revendications

1. Procédé de transfert d'un motif micronique (P) sur une surface d'un article optique (1), comprenant les étapes suivantes :
/a/ déposer une couche d'au moins un matériau transférable sur une surface d'un tampon comportant des creux (12) et des protubérances (13), constituant le microrelief à définition micronique ou sub-micronique, correspondant au motif à transférer ;
/b/ déposer une couche d'un latex sous forme liquide sur la surface du substrat de l'article optique;
/c/ avant que la couche de latex soit sèche, mettre en contact la surface du tampon qui comprend la couche de matériau transférable avec la couche de latex;
/d/ appliquer une pression sur le tampon; et
/e/ écarter le tampon de la surface de l'article optique comprenant la couche de latex.

2. Procédé selon la revendication 1 suivant lequel le motif micronique comprend un ou plusieurs motifs élémentaires chaque motif élémentaire présentant une taille comprise entre 10. µm et 50 nm, avantageusement entre 5 µm et 100 nm, et très avantageusement entre 3 µm et 150 nm.

3. Procédé selon l'une quelconque des revendications 1 ou 2 suivant lequel les creux (12) et les protubérances (13) présentent des dimensions comprises entre 10 micromètres et 50 nanomètres mesurées parallèlement à la membrane (11).

4. Procédé selon l'une des revendications précédentes suivant lequel la profondeur des creux est comprise entre 0,1 µm et 30 µm, avantageusement entre 0,1 µm et 10 µm.

5. Procédé selon l'une des revendications précédentes, suivant lequel le motif transféré (P) est un motif diffractant lorsque ledit motif est éclairé par un faisceau lumineux.

6. Procédé selon l'une des revendications précédentes, suivant lequel le motif transféré (P) est un motif holographique.

7. Procédé selon la revendication 6, suivant lequel le motif transféré (P) est un motif holographique de type hologramme d'amplitude.

8. Procédé selon la revendication 6, suivant lequel le motif transféré (P) est un motif holographique de type hologramme de phase.

9. Procédé selon la revendication 6, suivant lequel le motif transféré est un motif holographique de type hologramme numérique constitué d'un ensemble de pixels contigus, chaque pixel présentant une surface comprise entre 0,2 µm² et 25 µm², avantageusement entre 0.2 µm² et 4 µm².

10. Procédé selon l'une des revendications précédentes, suivant lequel le motif transféré (P) occupe une partie réduite d'une face de l'article optique (1).

11. Procédé selon la revendication 10, suivant lequel le motif transféré (P) occupe une partie de la face de l'article optique (1) inférieure à 25 mm².

12. Procédé selon l'une des revendications 1 à 8, suivant lequel le motif transféré (P) occupe toute une face de l'article optique (1).

13. Procédé selon la revendication 12, suivant lequel le motif transféré (P) comprend un réseau de fils parallèles conducteurs électriquement.

14. Procédé selon l'une des revendications 1 à 11, suivant lequel le motif holographique (P) est adapté pour former une image de lecture lorsqu'un faisceau lumineux (101) est envoyé à travers la lentille (1) à l'endroit dudit motif.

15. Procédé selon la revendication 1, suivant lequel la couche de latex (2) est déposée sur la surface de l'article optique (1) par un procédé de centrifugation.

16. Procédé selon la revendication 15, suivant lequel la couche de latex présente une épaisseur comprise entre 0,2 µm et 50 µm; préférentiellement comprise entre 1 µm et 10 µm.

17. Procédé selon la revendication 7, suivant lequel la surface du tampon (S) est appliquée contre la surface de l'article optique (1) portant la couche de latex (2), à l'étape /c/, dans des conditions adaptées de sorte que la couche de matériau transférable (14) située sur les protubérances (13) de la surface du tampon est sélectivement transférée sur la surface dudit article.

18. Procédé selon la revendication 17, suivant lequel la surface du tampon (S) est appliquée contre la surface de l'article optique (1) portant la couche de latex (2), à l'étape /c/, avec une pression comprise entre 0,1 g/mm² et 60 g/mm² de surface des protubérances du motif P

19. Procédé selon la revendication 8, suivant lequel la surface du tampon (S) est appliquée contre la surface de l'article optique (1) portant la couche de latex (2), à l'étape /c/, dans des conditions adaptées de sorte que les protubérances (13) de la surface du tampon pénètrent complètement dans la couche de latex, et de sorte que les portions de la couche de matériau transférable qui sont situées sur les protubérances (13) de la surface du tampon ainsi que celles situées dans les creux (12b) du tampon sont conjointement transférées sur la surface dudit article optique.

20. Procédé selon la revendication 19, suivant lequel lequel la surface du tampon (S) est appliquée contre la surface de l'article optique (1) portant la couche de latex (2), à l'étape /c/ à une pression supérieure à 60 g/mm² de surface des protubérances du motif P

21. Procédé selon la revendication 1, comprenant en outre l'étape suivante, qui est réalisée après l'étape /a/ et/ou l'étape /e/:
/f/ recouvrir la surface de l'article optique par un ou plusieurs revêtements fonctionnalisés.

22. Procédé selon la revendication 21, suivant lequel le revêtement fonctionnalisé présente une fonctionnalité de type anti-choc, anti-abrasion, antireflet, antisalissure, antibuée, antistatique, polarisante, colorante ou photochromique.

23. Procédé selon la revendication 21 ou 22, suivant lequel l'étape supplémentaire /f/ est réalisée après l'étape /e/.

24. Procédé selon la revendication 1, suivant lequel le matériau transférable est un matériau métallique.

25. Procédé selon la revendication 24, suivant lequel le matériau transférable est choisi parmi l'or, l'aluminium, le chrome, l'argent, le cuivre, le nickel, le platine, le palladium et un alliage comprenant l'un au moins de ces métaux.

26. Procédé selon l'une quelconque des revendications 24 ou 25, suivant lequel la couche de matériau transférable est déposée à l'étape /a/ sur la surface du tampon (S) par évaporation sous vide ou par pulvérisation cathodique sous vide.

27. Procédé selon l'une des revendications 24 à 26, suivant lequel la couche de matériau transférable (14) comprend un empilement de plusieurs couches de matériaux respectifs.

28. Procédé selon la revendication 27, suivant lequel le matériau de l'une au moins des couches de l'empilement est réfringent.

29. Procédé selon la revendication 1, suivant lequel le tampon est à base de polydiméthysiloxane au moins à l'endroit des protubérances (13) de la surface du tampon (S).

30. Procédé selon la revendication 1, suivant lequel le tampon présente une approche parallèle à la normale du point de contact sur le substrat de l'article optique.

31. procédé selon l'une des revendications précédentes, suivant lequel la surface du tampon (S) est adaptée pour se déformer lors de l'application contre la surface du produit (1) à l'étape /c/, en fonction d'une courbure de ladite surface du produit.

32. Procédé selon l'une des revendications précédentes, comprenant en outre une étape de traitement de la surface de l'article optique (1), effectué avant l'étape /b/.

33. Procédé selon la revendication 1, suivant lequel l'article optique (1) est choisi parmi une lentille optique d'instrumentation, une lentille de visée, une visière et une lentille ophtalmique.

34. Procédé selon la revendication 33, suivant lequel l'article optique (1) est une lentille ophtalmique choisie parmi une lentille afocale, unifocale, bifocale, trifocale et progressive.

35. Article optique (1) représentant une lentille ophtalmique, ladite lentille comprenant elle-même :
- une lentille de base comprenant au moins un substrat organique ou minéral,
- une couche de latex séché (2), et
- des portions d'un matériau transférable formant un motif transféré (P),
le motif étant transféré sur une surface de la lentille de base par un procédé selon l'une quelconque des revendications précédentes, par adhésion sur la lentille de base via la couche de latex séché.

36. Article selon la revendication 35, dans lequel le motif (P) est formé par plusieurs portions de matériau d'impression situées à un même niveau sur la couche de latex (2), selon une direction perpendiculaire à ladite couche, et séparées par des intervalles (4a) dépourvus de matériau transféré.

37. Article selon la revendication 35, dans lequel le motif (P) est embossé dans la couche de latex (2), et dans lequel plusieurs portions de matériau transféré (3, 4b) sont situées à des niveaux différents de profondeur de gravure du motif dans la couche de latex.

38. Article selon l'une quelconque des revendications 35 à 37, dans lequel la couche de latex (2) forme en outre une protection de la lentille (1) contre des éventuels chocs reçus ultérieurement par ladite lentille.

## Claims

1. A method of transferring a micron-scale pattern (P) onto a surface of an optical article (1), the method comprising the following steps:
a) depositing a layer of at least one transferable material on a surface of a stamp having recesses (12) and protuberances (13) constituting a micro-relief with micron-scale or submicron-scale definition, corresponding to the pattern to be transferred;
b) depositing a layer of a latex in the liquid form on the surface of the substrate of the optical article;
c) before the layer of latex is dry, bringing the surface of the stamp that includes the layer of transferable material into contact with the layer of latex;
d) applying a pressure to the stamp; and
e) removing the stamp from the surface of the optical article comprising the layer of latex.

2. Method according to claim 1, in which the micron-scale pattern comprises one or more individual patterns, each individual pattern having a dimension in the range 10 µm to 50 nm, advantageously in the range 5 µm to 100 nm, and highly advantageously in the range 3 µm to 150 nm.

3. Method according to claim 1 or claim 2, in which the recesses (12) and the protuberances (13)have dimensions in the range 10 micrometers to 50 nanometers, measured parallel to the membrane (11).

4. Method according to any one of the preceding claims, in which the depth of the recesses is in the range 0.1 µm to 30 µm, advantageously in the range 0.1 µm to 10 µm.

5. Method according to any one of the preceding claims, in which the transferred pattern (P) is a diffracting pattern when said pattern is illuminated by a beam of light.

6. Method according to any one of the preceding claims, in which the transferred pattern (P) is a holographic pattern.

7. Method according to claim 6, in which the transferred pattern (P) is an amplitude hologram type holographic pattern.

8. Method according to claim 6, in which the transferred pattern (P) is a phase hologram type holographic pattern.

9. Method according to claim 6, in which the transferred pattern is a digital hologram type holographic pattern constituted by a set of contiguous pixels, each pixel having a surface area in the range 0.2 µm² to 25 µm², advantageously in the range 0.2 µm² to 4 µm².

10. Method according to any one of the preceding claims, in which the transferred pattern (P) occupies a small portion of a face of the optical article (1).

11. Method according to claim 10, in which the transferred pattern (P) occupies a portion of the face of the optical article (1) of less than 25 mm².

12. Method according to any one of claims 1 to 8, in which the transferred pattern (P) occupies an entire face of the optical article (1).

13. Method according to claim 12, in which the transferred pattern (P) comprises an array of parallel electrically conductive wires.

14. Method according to any one of claims 1 to 11, in which the holographic pattern (P) is adapted to form a reading image when a beam of light (101) is passed through the lens (1) at the location of said pattern.

15. Method according to claim 1, in which the layer of latex (2) is deposited on the surface of the optical article (1) using a spin-coating method.

16. Method according to claim 15, in which the thickness of the layer of latex is in the range 0.2 µm to 50 µm, preferably in the range 1 µm to 10 µm.

17. Method according to claim 7, in which in step c) the surface (S) of the stamp is applied against the surface of the optical article (1) carrying the layer of latex (2) under conditions such that the layer of transferable material (14) located on the protuberances (13) of the surface of the stamp is selectively transferred onto the surface of said article.

18. Method according to claim 17, in which in step c) the surface (S) of the stamp is applied against the surface of the optical article (1) carrying the layer of latex (2) with pressure in the range 0.1 g/mm² to 60 g/mm² of surface of the protuberances of pattern P.

19. Method according to claim 8, in which in step c) the surface (S) of the stamp is applied against the surface of the optical article (1) carrying the layer of latex (2) under conditions such that the protuberances (13) of the surface of the stamp penetrate completely into the layer of latex, and such that the portions of the layer of transferable material that are located on the protuberances (13) of the surface of the stamp as well as those located in the recesses (12b) of the stamp are jointly transferred onto the surface of said optical article.

20. Method according to claim 19, in which in step c) the surface (S) of the stamp is applied against the surface of the optical article (1) carrying the layer of latex (2) at a pressure of more than 60 g/mm² of the surface of the protuberances of pattern P.

21. Method according to claim 1, further comprising the following step, carried out after step a) and/or step e):
f) covering the surface of the optical article with one or more functionalized coatings.

22. Method according to claim 21, in which the functionalized coating has an anti-shock, anti-abrasion, antireflective, soil-repellent, anti-fogging, antistatic, polarizing, coloring, or photochromic function.

23. Method according to claim 21 or claim 22, in which the additional step f) is carried out after step e).

24. Method according to claim 1, in which the transferable material is a metallic material.

25. Method according to claim 24, in which the transferable material is selected from gold, aluminum, chromium, silver, copper, nickel, platinum, palladium, and an alloy comprising at least one of said metals.

26. Method according to claim 24 or claim 25, in which the layer of transferable material is deposited in step a) onto the surface (S) of the stamp by vacuum evaporation or vacuum cathodic sputtering.

27. Method according to any one of claims 24 to 26, in which the layer of transferable material (14) comprises a stack of a plurality of layers of respective materials.

28. Method according to claim 27, in which the material of at least one of the layers of the stack is refringent.

29. Method according to claim 1, in which the stamp is based on polydimethylsiloxane at least at the location of the protuberances (13) of the surface (S) of the stamp.

30. Method according to claim 1, in which the stamp is approached parallel to the normal at the point of contact on the substrate of the optical article.

31. Method according to any one of the preceding claims, in which in step c) the surface (S) of the stamp is adapted to deform during application against the surface of the product (1) as a function of a curvature of said product surface.

32. Method according to any one of the preceding claims, further comprising a step of processing the surface of the optical article (1) carried out before step b).

33. Method according to claim 1, in which the optical article (1) is selected from an instrumentation optical lens, a viewing lens, a visor, and an ophthalmic lens.

34. Method according to claim 33, in which the optical article (1) is an ophthalmic lens selected from afocal, single vision, bifocal, trifocal, and progressive power lenses.

35. An optical article (1) representing an ophthalmic lens, said lens itself comprising:
a base lens comprising at least one organic or mineral substrate;
a layer of dried latex (2); and
portions of a transferable material forming a transferred pattern (P),
the pattern being transferred on a surface of the base lens using a method according to any one of the preceding claims, by adhesion to the base lens via the layer of dried latex.

36. Article according to claim 35, in which the pattern (P) is formed by several portions of printing material located at the same level on the layer of latex (2) in a direction perpendicular to said layer and separated by gaps (4a) that are free of transferred material.

37. Article according to claim 35, in which the pattern (P) is embossed into the layer of latex (2) and in which several portions of transferred material (3, 4b) are located at different engraving depths into the layer of latex.

38. Article according to any one of the claims 35 to 37, in which the layer of latex (2) further forms a protection for the lens (1) against shocks which may subsequently be received by said lens.

## Patentansprüche

1. Verfahren zur Übertragung einer mikrometrischen Struktur (P) auf eine Oberfläche eines optischen Artikels (1), welches die folgenden Schritte umfasst:
/a/ Ablagerung einer Schicht mindestens eines übertragbaren Materials auf einer Oberfläche eines Stempels, welcher Aussparungen (12) und Vorsprünge (13) aufweist, die das Mikrorelief mit einer mikrometrischen oder submikrometrischen Definition bilden, welches der zu übertragenden Struktur entspricht;
/b/ Ablagerung einer Latexschicht in flüssiger Form auf der Oberfläche des Substrats des optischen Artikels;
/c/ In Kontakt bringen der Oberfläche des Stempels, der die Schicht aus übertragbarem Material umfasst, mit der Latexschicht, bevor die Latexschicht trocken ist;
/d/ Anwenden von Druck auf den Stempel; und
/e/ Entfernen des Stempels von der Oberfläche des optischen Artikels, welcher die Latexschicht umfasst.

2. Verfahren nach Anspruch 1, wobei die Mikronenstruktur ein oder mehrere Grundstruktur(en) umfasst, wobei jede Grundstruktur eine Größe zwischen 10 µm und 50 nm, bevorzugt zwischen 5 µm und 100 nm und stark bevorzugt zwischen 3 µm und 150 nm aufweist.

3. Verfahren nach einem der Ansprüche 1 oder 2, wobei die Aussparungen (12) und die Vorsprünge (13), parallel zur Membran (11) gemessen, Abmessungen zwischen 10 Mikrometern und 50 Nanometern aufweisen.

4. Verfahren nach einem der vorhergehenden Ansprüche, wobei die Tiefe der Aussparungen zwischen 0,1 µm und 30 µm, bevorzugt zwischen 0,1 µm und 10 µm ist.

5. Verfahren nach einem der vorhergehenden Ansprüche, wobei die übertragene Struktur (P) eine beugende Struktur ist, wenn die Struktur mit einem Lichtbündel bestrahlt wird.

6. Verfahren nach einem der vorhergehenden Ansprüche, wobei die übertragene Struktur (P) eine holographische Struktur ist.

7. Verfahren nach Anspruch 6, wobei die übertragene Struktur (P) eine holographische Struktur vom Typ eines Amplitudenhologramms ist.

8. Verfahren nach Anspruch 6, wobei die übertragene Struktur (P) eine holographische Struktur vom Typ eines Phasenhologramms ist.

9. Verfahren nach Anspruch 6, wobei die übertragene Struktur eine holographische Struktur vom Typ eines digitalen Hologramms ist, welches von einem Satz zusammenhängender Pixel gebildet wird, wobei jedes Pixel eine Oberfläche zwischen 0,2 µm² und 25 µm², bevorzugt zwischen 0,2 µm² und 4 µm² aufweist.

10. Verfahren nach einem der vorhergehenden Ansprüche, wobei die übertragene Struktur (P) einen reduzierten Teil einer Fläche des optischen Artikels (1) einnimmt.

11. Verfahren nach Anspruch 10, wobei die übertragene Struktur (P) einen Teil der Fläche des optischen Artikels (1) von weniger als 25 mm² einnimmt.

12. Verfahren nach einem der Ansprüche 1 bis 8, wobei die übertragene Struktur (P) eine ganze Fläche des optischen Artikels (1) einnimmt.

13. Verfahren nach Anspruch 12, wobei die übertragene Struktur (P) ein Netz aus parallelen elektrisch leitfähigen Drähten umfasst.

14. Verfahren nach einem der Ansprüche 1 bis 11, wobei die holographische Struktur (P) angepasst ist, um ein lesbares Bild zu formen, wenn ein Lichtbündel (101) an der Stelle der Struktur durch die Linse (1) hindurch geschickt wird.

15. Verfahren nach Anspruch 1, wobei die Latexschicht (2) auf der Oberfläche des optischen Artikels (1) durch ein Zentrifugationsverfahren abgelagert wird.

16. Verfahren nach Anspruch 15, wobei die Latexschicht eine Dicke zwischen 0,2 µm und 50 µm, bevorzugt zwischen 1 µm und 10 µm aufweist.

17. Verfahren nach Anspruch 7, wobei die Oberfläche des Stempels (S) in Schritt /c/ gegen die Oberfläche des optischen Artikels (1), der die Latexschicht (2) trägt, unter Bedingungen angewendet wird, die dazu geeignet sind, dass die Schicht aus übertragbarem Material (14), die sich auf den Vorsprüngen (13) der Oberfläche des Stempels befindet, selektiv auf die Oberfläche des Artikels übertragen wird.

18. Verfahren nach Anspruch 17, wobei die Oberfläche des Stempels (S) in Schritt /c/ gegen die Oberfläche des optischen Artikels (1), der die Latexschicht (2) trägt, mit einem Druck zwischen 0,1 g/mm² und 60 g/mm² der Oberfläche der Vorsprünge der Struktur P angewendet wird.

19. Verfahren nach Anspruch 8, wobei die Oberfläche des Stempels (S) in Schritt /c/ gegen die Oberfläche des optischen Artikels (1), der die Latexschicht (2) trägt, unter Bedingungen angewendet wird, die dazu geeignet sind, dass die Vorsprünge (13) der Oberfläche des Stempels vollständig in die Latexschicht eindringen und so, dass die Teile der Schicht des übertragbaren Materials, die sich auf den Vorsprüngen (13) der Oberfläche des Stempels befinden, sowie diejenigen, die sich in den Aussparungen (12b) des Stempels befinden gemeinsam auf die Oberfläche des optischen Artikels übertragen werden.

20. Verfahren nach Anspruch 19, wobei die Oberfläche des Stempels (S) in Schritt /c/ gegen die Oberfläche des optischen Artikels (1), der die Latexschicht (2) trägt, mit einem Druck von größer als 60 g/mm² der Oberfläche der Vorsprünge der Struktur P angewendet wird.

21. Verfahren nach Anspruch 1, welches weiterhin den folgenden Schritt umfasst, der nach Schritt /a/ und/oder Schritt /e/ durchgeführt wird:
/f/ Überziehen der Oberfläche des opischen Artikels mit einer oder mehreren funktionalisierten Beschichtung(en).

22. Verfahren nach Anspruch 21, wobei die funktionalisierte Beschichtung eine Funktionalität vom Anti-Stoß-, Anti-Abrieb-, Antireflexions-, schmutzabweisenden, Antibeschlag-, antistatischen, polarisierenden, färbenden oder photochromen Typ aufweist.

23. Verfahren nach Anspruch 21 oder 22, wobei der zusätzliche Schritt /f/ nach Schritt /e/ durchgeführt wird.

24. Verfahren nach Anspruch 1, wobei das übertragbare Material ein metallisches Material ist.

25. Verfahren nach Anspruch 24, wobei das übertragbare Material aus Gold, Aluminium, Chrom, Silber, Kupfer, Nickel, Platin, Palladium und einer Legierung, die mindestens eines dieser Metalle umfasst, ausgewählt ist.

26. Verfahren nach einem der Ansprüche 24 oder 25, wobei die Schicht aus übertragbarem Material in Schritt /a/ durch Aufdampfen oder durch Vakuum-Kathodenzerstäubung auf der Oberfläche des Stempels (S) abgelagert wird.

27. Verfahren nach einem der Ansprüche 24 bis 26, wobei die Schicht aus übertragbarem Material (14) einen Stapel mehrerer entsprechender Materialschichten umfasst.

28. Verfahren nach Anspruch 27, wobei das Material von mindestens einer der Schichten des Stapels brechend ist.

29. Verfahren nach Anspruch 1, wobei der Stempel zumindest an der Stelle der Vorsprünge (13) der Oberfläche des Stempels (S) auf der Basis von Polydimethylsiloxan ist.

30. Verfahren nach Anspruch 1, wobei der Stempel einen Ansatz aufweist, der parallel zu der Normalen der Kontaktstelle auf dem Substrat des optischen Artikels ist.

31. Verfahren nach einem der vorhergehenden Ansprüche, wobei in Schritt /c/ die Oberfläche des Stempels (S) so angepasst ist, dass sie sich während der Anwendung gegen die Oberfläche des Produkts (1) als Funktion einer Krümmung der Produktoberfläche verformt.

32. Verfahren nach einem der vorhergehenden Ansprüche, welches weiterhin einen Schritt der Bearbeitung der Oberfläche des optischen Artikels (1) umfasst, welcher vor Schritt /b/ durchgeführt wird.

33. Verfahren nach Anspruch 1, wobei der optische Artikel (1) aus einer optischen Linse für Instrumente, einer Visierlinse, einem Visier und einer ophthalmischen Linse ausgewählt ist.

34. Verfahren nach Anspruch 33, wobei der optische Artikel (1) eine ophthalmische Linse ist, die aus einer afokalen, unifokalen, bifokalen, trifokalen und progressiven Linse ausgewählt ist.

35. Optischer Artikel (1), welcher eine ophthalmische Linse darstellt, wobei die Linse umfasst:
- eine Basislinse, welche mindestens ein organisches oder mineralisches Substrat umfasst,
- eine getrocknete Latexschicht (2) und
- Teile eines übertragbaren Materials, die eine übertragbare Struktur (P) formen,
wobei die Struktur durch ein Verfahren nach einem der vorhergehenden Ansprüche, durch Adhäsion auf der Basislinse mittels der getrockneten Latexschicht, auf eine Oberfläche der Basislinse übertragen wird.

36. Artikel nach Anspruch 35, wobei die Struktur (P) durch mehrere Teile an Prägematerial, welche sich auf gleicher Ebene auf der Latexschicht (2) in einer Richtung, die senkrecht zu der Schicht ist, befinden, und die durch Abstände (4a) voneinander getrennt sind, die frei von übertragenem Material sind.

37. Artikel nach Anspruch 35, wobei die Struktur (P) in die Latexschicht (2) geprägt wird und wobei sich mehrere Teile des übertragenen Materials (3, 4b) auf unterschiedlichen Ebenen der Gravurtiefe der Struktur in der Latexschicht befinden.

38. Artikel nach einem der Ansprüche 35 bis 37, wobei die Latexschicht (2) weiterhin einen Schutz der Linse (1) gegen eventuelle Stöße, die die Linse später erhalten kann, bildet.
